# EUROPÄISCHE PATENTSCHRIFT

(11) **EP 1 112 814 B1**
(45) Veröffentlichungstag und Bekanntmachung des Hinweises auf die Patenterteilung: **23.03.2005**
(21) Anmeldenummer: 00128619.4
(22) Anmeldetag: 28.12.2000
(51) Int. Cl.: B24C 1/04, B23Q 11/08, B24C 1/10

(54) **Schutzabdeckung für Werkzeugmaschinen und Verfahren zu deren Herstellung**
Protective cover for machine tools and method of its production
Protecteur pour machines-outils et procédé pour sa fabrication

(30) Priorität: 03.01.2000 DE 10000026
(43) Veröffentlichungstag der Anmeldung: 04.07.2001
(73) Patentinhaber: DECKEL MAHO Pfronten GmbH, 87459 Pfronten (DE)
(72) Erfinder: Seitz, Reinhold, 87659 Hopferau (DE)
(74) Vertreter: Beetz & Partner Patentanwälte

(56) Entgegenhaltungen:
- EP-A- 0 413 954
- WO-A-99/41018
- GB-A- 2 106 430
- US-A- 4 727 013
- US-A- 5 829 116

## Beschreibung

Die Erfindung begrifft eine Schutzkabine einer Werkzeugmaschine der im Oberbegriff des Patentanspruchs 1 angegebenen Gattung, sowie ein Verfahren zur Herstellung von Abschlußleisten von Schiebetüren.

Aus Sicherheitsgründen und zum Schutz der Umgebung vor den bei der Bearbeitung anfallenden Spänen und den vielfach verwendeten Kühlschmiermitteln weisen programmgesteuerte Werkzeugmaschinen in der Regel eine Schutzkabine auf. Herkömmliche Schutzkabinen bestehen üblicherweise aus Stahlblech, das nach der entsprechenden Formung und Bearbeitung mit einer Lackierung versehen wird. Eine derartige Schutzkabine mit Seitenwänden und einer am Maschinengestell geführten Schiebetüre, deren Höhe etwa der Höhe der Seitenwände entspricht und die einen Handgriff sowie in ihrem Mittelteil ein Sichtfenster aufweist, ist z.B aus der DE 199 56 900 A bekannt, die als nächtsliegender Stand der Technik angesehen wird.

Zur Herstellung von Schutzkabinen werden aber auch bereits sogenannte Dekorbleche eingesetzt, die eine vorgefertigte Obeflächenstruktur aufweisen. Bei derartigen Dekorblechen ergibt sich allerdings die Problematik, daß die auf den Blechen aufgebrachte Oberflächenstruktur durch anschließende Bearbeitungsschritte, wie z.B. Biegen oder Schweißen, beschädigt oder zerstört wird. Derartige Dekorbleche sind für noch zu formende und ggf. nachzubearbeitende Schutzabdeckungen daher nur bedingt geeignet

Aus der EP 0 413 954 A ist eine bewegliche bedienerseitige Arbeitsraumabdeckung als Teil einer Schutzkabine bekannt, die als Schiebetüre oder Schwenkhaube ausgebindet ist und durchgehend aus einem festen und kerbschlagzähen Kunststoff, vorzugsweise aus dem im allgemeinen für die Sichtfenster verwendeten Polykarbonat, besieht. Bis auf ein gläsernes Sichtfenster kann eine der Oberflächen durch Sandstrahlen mattiert Sein. Wegen der problematischen Formsteifigkeit von großflächigen Kunststoffteilen ist ein Einsatz derartiger Abdeckelemente nur bei kleineren Werkzeugmaschinen praktikabel.

Aus der GB 2 106 430 A ist es bekannt, eine oder auch beide Oberflächen von Edelstahlblechen mittels mehrerer relativ bewegter Sand- oder Kugelstrahlen mit einem Mattierungsmuster zu versehen.

Aufgabe der Erfindung ist es, eine Schutzkabine einer Werkzeugmaschine zu schaffen, deren mit einem einfach aufzubringenden Dekor versehene Türen eine verbesserte Formsteifigkeit und in den besonders beanspruchten Bereichen eine erhöhte Korrosionsbeständigkeit und Kratzfestigkeit aufweisen.

Diese Aufgabe wird durch die im Patentanspruch 1 angegebenen Merkmale gelöst.

Zweckmäßige Ausgestaltungen der Erfindung sind in den Unteransprüchen angegeben.

Ein wesentlicher Vorteil der Erfindung besteht darin, daß fertig geformte Abschlußleisten der Schiebetüren einer Schutzkabine für Werkzeugmaschinen auf einfache Weise mit einem gewünschten Oberflächendekor versehen werden können. Zu dessen Herstellung gemäß Anspruch 3 wird auf die Oberfläche der fertig bearbeiteten und z.B. geschliffenen Blechteile aus Edelstahl eine Musterfolie aufgebracht. Diese Musterfolie kann eine doppelseitig klebende Kunststoffolie mit beabstandeten Streifen sein, die auf einer Trägerfolie aufgebracht und durch eine abziehbare Schutzfolie geschützt ist. Nach dem Abziehen der Schutzfolie kann so die auf der Trägerfolie angeordnete Musterfolie auf das Formteil aufgeklebt werden, wobei die Musterfolie beliebig plaziert und auch auf runde Teile oder über Kanten hinweg einfach aufgebracht werden kann. Dann wird die Trägerfolie abgezogen und die mit der Musterfolie beklebte Oberfläche wird z.B. mit Glasperlen gestrahlt. Dabei werden die durch die Musterfolie nicht abgedeckten Bereiche verdichtet und mattiert. Die abgedeckten Bereiche behalten dagegen ihre z.B. geschliffene Oberfläche bei. Durch entsprechende Anordnung der Musterfolie kann dabei erreicht werden, daß z.B. geschweißte Bereiche nach der Strahlbehandlung mattiert sind. Abschließend muß dann nur noch die Musterfolie abgezogen werden.

In einer besonders zweckmäßigen Weise wird das Strahlen der Oberfläche mit Glasperlen durchgeführt. Es können aber auch andere runde oder zumindest gerundete Strahlmittelkörper aus anderen Materialien verwendet werden.

Die so hergestellten Abschlußleisten sind korrosionsbeständig und weisen eine gegen Verkratzen unempfindliche Oberfläche auf. Als ein besonders zweckmäßiges Muster hat sich ein Streifenmuster erwiesen, bei dem die Oberfläche abwechselnd mattierte und nicht mattierte streifenförmige Bereiche aufweist. Die Streifenbreite des Streifenmusters liegt zweckmäßigerweise zwischen 6 und 10 mm. Dadurch wird auch eine ausreichende Haftung der Musterfolie auf den Formteilen gewährleistet.

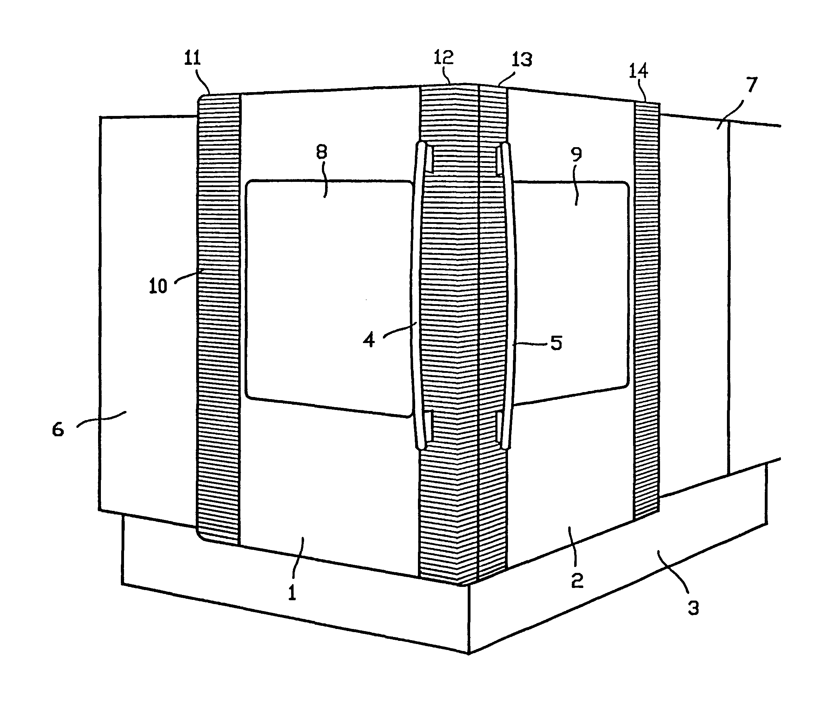

Weitere Besonderheiten und Vorzüge der Erfindung ergeben sich aus der folgenden Beschreibung eines vorteilhaften Ausführungsbeispiels anhand der Zeichnung, die eine erfindungsgemäße Schutzkabine einer Werkzeugmaschine zeigt.

Die in der Zeichnung schematisch dargestellte Schutzkabine einer Werkzeugmaschine enthält eine Fronttüre 1 und eine Seitentüre 2, die über entsprechende Führungen an einem Maschinengestell 3 geführt und durch Handgriffe 4 bzw. 5 zur Seite verschiebbar sind. Neben der Front- und Seitentüre 2 sind Seitenwände 6 und 7 als Teile der die Werkzeugmaschine umgebenden Schutzkabine angeordnet. Die beiden Schiebetüren 1, 2 weisen in ihrem glattwandigen breiten Mittelteil je ein Sichtfenster 8, 9 und jeweils zwei vertikale seitliche Abschlußleisten 11, 12 bzw. 13, 14 auf, die an ihrer Außenseite mit einem streifenförmigen Muster versehen sind. Die beiden Abschlußleisten 11, 12 der Fronttüre 1 und die hintere Abschlußleiste 14 der Seitentüre 2 haben je einen eingebogenen Rand. Die relativ formsteifen Abschlußleisten 11 bis 14 sind aus Edelstahlblech gefertigt und das Muster an ihrer Außenfläche besteht aus einer wechselnden Folge von glattglänzenden und mattierten horizontalen Streifen gleicher Breite.

Zur Herstellung der Abschlußleisten 11 bis 14 werden Blechzuschnitte z.B. durch Biegen und ggf. Verschweißen in die gewünschte Form gebracht. Von einer zweckmäßig in relativ breiten Bahnen vorgefertigten Verbundfolie werden Zuschnitte in einer den zu musternden Flächen der Kabinenelemente entsprechenden Größe und Form ab- bzw. zugeschnitten. Von diesen Zuschnitten wird die unterseitige Schutzfolie abgezogen und die dann freiliegende Musterfolie wird auf die zu musternden Flächen der Blechformteile incl. ihrer kritischen Rundungen, Kanten, Schweißstellen etc. aufgeklebt. Da die Musterfolie noch mit der ausreichend stabilen und flexiblen Trägerfolie z.B. durch Klebehaftung verbunden ist, wird gewährleistet, daß die Musterelemente der Musterfolie beim Aufkleben auf die Blechteile nicht aus ihrer gewünschten Lage gebracht werden. Nach dem durchgehenden Aufkleben der Musterfolie z.B. durch Selbstklebung oder durch ein aufgetragenes Haftmittel wird die oberseitige Trägerfolie von der Musterfolie abgezogen, wobei vor oder nach diesem Abziehvorgang Lagekorrekturen vorgenommen werden können. Das so vorbereitete Formteil wird anschließend mit Glasperlen gestrahlt, wobei die Oberfläche der durch die Musterfolie nicht abgedeckten Bereich verdichtet und mattiert wird. Die durch die Musterfolie abgedeckten Bereiche behalten dagegen die z.B. vorher geschliffene Oberfläche bei.

Nach dem Strahlen der Formteile mit den Glasperlen wird dann die Musterfolie abgezogen, so daß z.B. das dargestellte Streifendekor mit abwechselnd mattierten und glattglänzenden streifenförmigen Bereichen entsteht. Die Klebstoffschicht ist dabei derart ausgebildet, daß nach dem Abziehen der Musterfolie keine Rückstände auf den Formteilen zurückbleiben.

Mit diesem Verfahren können großflächige und relativ kompliziert geformte Bauteile von Schutzkabinen auf technisch einfache und kostengünstige Weise mit einem ggf. filigranen Muster ohne Unregelmäßigkeiten versehen werden, da entsprechend großflächige Folien als vorgeschnittene oder erst vor Ort geschnittene Zuschnitte verwendet werden und die Musterfolie beim Aufkleben an der Trägerfolie lagefixiert ist. Mit dem Verfahren können nicht nur einzelne Blechprofile, sondern auch ganze Türen oder Abdeckplatten bearbeitet werden. Die Erfindung ist nicht auf das in der Zeichnung dargestellte Ausführungsbeispiel beschränkt.

## Patentansprüche

1. Schutzkabine einer Werkzeugmaschine mit
- an einem Maschinengestell (3) befestigten Seitenwänden (6, 7) und
- mindestens einer am Maschinengestell (3) geführten Schiebettire ( 1, 2), deren Höhe etwa der Höhe der Seitenwände (6, 7) entspricht und die einen Handgriff (4, 5) sowie in ihrem Mittelteil ein Sichtfenster (8, 9) aufweist,
**dadurch gekennzeichnet, daß**
- die Schiebetür (1, 2) an ihren Längsseiten formsteife Abschlußleisten (11, 12; 13, 14) aus geformtem Edelstahlblech aufweist, die einen eingebogenen Rand haben und an ihrer Außenfläche mit einem Muster aus glatt glänzenden Bereichen und aus durch Kugelstrahlen verdichteten mattierten Bereichen versehen sind.

2. Schutzkabine nach Anspruch 1,
**dadurch gekennzeichnet, daß**
das Muster ein Streifenmuster aus abwechselnden glänzenden und mattierten horizontalen Streifen ist.

3. Verfahren zum Herstellen von Abschlußleisten von Schiebetüren,
wobei die Abschlußleiste aus geformtem Fedelstahlblech gefertigt sind, einen eingebogenen Rand haben und an ihrer Außenfläche mit einem Muster aus glatt glänzenden Bereichen und aus durch Kugelstrahlen verdichteten mattierten Bereichen versehen sind, und wobei
- Edelstahlblechzuschnitte durch Biegen und ggf. Verschweißen in die gewünschte Form der Abschlußleiste gebracht werden,
- von einer Verbundfolie, bestehend aus einer ausreichend stabilen flexiblen Trägerfolie, einer Musterfolie und einer Schutzfolie, Zuschnitte in einer der zu bemusternden Fläche der Abschlußleiste entsprechenden Form und Größe zugeschnitten werden,
- die Folienzuschnitte nach Abziehen der Schutzfolie auf die zu musternden Flächen der Abschlußleiste incl. ihrer Rundungen, Kanten und Ränder aufgeklebt werden,
- danach die Trägerfolie von der angeklebten Musterfolie abgezogen wird,
- danach die mit der Musterfolie behaftete Oberfläche der Abschlußleiste kugelbestrahlt wird und
- danach die Musterfolie abgezogen wird.

## Claims

1. Protective cabinet for a tool machine having
• lateral walls (6, 7) attached to a machine frame (3) and
• at least one sliding door (1, 2) which is guided on the machine frame (3) and the height of said sliding door corresponds approximately to the height of the lateral walls (6, 7) and which sliding door comprises a handle (4, 5) and a viewing window (8, 9) in its middle portion,
**characterised in that**
• the sliding door (1; 2) comprises on its longitudinal sides rigid closure strips (11, 12; 13, 14) which are made from shaped stainless steel sheet and which have an inwardly curved border and which are provided on their outer surface with a pattern of smooth, gloss areas and of matt areas which are compacted by shot blasting with steel balls.

2. Protective cabinet as claimed in claim 1,
**characterised in that**
the pattern is a stripped pattern of alternating gloss and matt horizontal strips.

3. Method of producing closure strips of sliding doors, wherein the closure strips are manufactured from shaped stainless steel sheet, have an inwardly curved border and are provided on their outer surface with a pattern of smooth, gloss areas and of matt areas which are compacted by shot blasting with steel balls, and wherein
• stainless sheet sheet blanks are given the desired shape of the closure strip by bending and where necessary by welding,
• blanks are cut from a compound foil consisting of a sufficiently stabile, flexible carrier foil, a patterned foil and a protective foil, into a shape and size corresponding to the surface which is to be patterned of the closure strip,
• after removing the protective foil the foil blanks are adhered to the surfaces to be patterned of the closure strip incl. their rounded areas, edges and borders,
• subsequently the carrier foil is peeled off the adhered patterned foil,
• subsequently the surface, which is adhered to the patterned foil, of the closure strip is shot blasted with steel balls and
• subsequently the patterned foil is peeled off.

## Revendications

1. Cabine de protection d'une machine-outil comportant
- des parois latérales (6, 7) fixées à un bâti de machine (3)
- et au moins une porte coulissante (1, 2) guidée sur le bâti de machine (3), porte dont la hauteur correspond approximativement à la hauteur des parois latérales (6, 7) et qui comporte une poignée (4, 5) ainsi qu'une fenêtre d'inspection (8, 9) dans sa partie médiane,
**caractérisée en ce que**
- la porte coulissante (1, 2) comporte sur son grand côté des baguettes (11, 12, 13, 14) à stabilité propre en tôle façonnée en acier spécial, baguettes qui ont un bord plié et qui sont pourvues sur leur surface extérieure d'un motif constitué de zones bien brillantes et de zones dépolies densifiées par grenaillage.

2. Cabine de protection selon la revendication 1, **caractérisée en ce que** le motif est un motif à bandes constitué de bandes horizontales tour à tour brillantes et dépolies.

3. Procédé pour fabriquer des baguettes de portes coulissantes,
sachant que les baguettes sont fabriquées en tôle façonnée en acier spécial, ont un bord plié et sont pourvues sur leur surface extérieure d'un motif constitué de zones bien brillantes et de zones dépolies densifiées par grenaillage,
- et que les découpes de tôle en acier spécial sont exécutées selon la forme souhaitée de la baguette par pliage et, le cas échéant, par soudage,
- sachant qu'à partir d'un film multicouche constitué d'un film porteur suffisamment flexible et stable, d'un film à motif et d'un film protecteur, les découpes sont découpées selon une forme et une dimension correspondant à une des surfaces à décorer de la baguette,
- les découpes de film étant collées, après retrait du film protecteur, sur les surfaces à décorer de la baguette y compris ses courbures, ses arêtes et ses bords,
- puis le film porteur est retiré du film à motif collé,
- puis la surface de la baguette où le film à motif est collé est grenaillée et
- puis le film à motif est retiré.
